# Europäisches Patentamt

## European Patent Office

## Office européen des brevets

(19)

(11) Veröffentlichungsnummer: **0 185 912**

**A1**

(12) # EUROPÄISCHE PATENTANMELDUNG

(21) Anmeldenummer: 85114536.7

(22) Anmeldetag: 15.11.85

(51) Int. Cl.⁴: **H 04 B 1/20**

(30) Priorität: 21.12.84 DE 3446806

(43) Veröffentlichungstag der Anmeldung:
02.07.86 Patentblatt 86/27

(84) Benannte Vertragsstaaten:
AT CH FR GB LI

(71) Anmelder: Braun Electronic GmbH
Am Auernberg 12
D-6242 Kronberg(DE)

(72) Erfinder: Adler, Dietmar
Friedrich-Ebert-Strasse 3
D-6240 Königstein(DE)

(72) Erfinder: Lagerbauer, Norbert, Dipl.-Ing.
Ährenstrasse 8
D-6000 Frankfurt 1(DE)

(72) Erfinder: Hartwein, Peter
Frankfurter Strasse 14a
D-6240 Königstein(DE)

(74) Vertreter: Schickedanz, Willi
Langener Strasse 70
D-6050 Offenbach/Main(DE)

(54) Fernbedienungsgerät für Rundfunkempfangsgeräte und dergleichen.

(57) Die Erfindung betrifft ein Fernbedienungsgerät für Rundfunkempfangsgeräte und dergleichen, das für die gemeinsame oder sukzessive Fernbedienung mehrerer Geräte vorgesehen ist. Es weist eine Reihe von aufeinanderliegenden Fällblättern 40 auf, von denen jedes einem bestimmten Gerät oder einer bestimmten Funkionsart zugeordnet ist. Mit Hilfe eines hochklappbaren Deckels 41 und eines am dem Deckel vorgesehen Greifers 42 ist es möglich, Fallblätter nach oben zu heben, so daß nur das Fallblatt aufliegt, das für die gerade gewünschte Funktionsart erforderlich ist. Die Fallblätter weisen Durchbrechungen auf, durch welche Bedienungstasten (20-39) ragen. In der Nähe dieser Bedienungstasten ist auf jedem Fallblatt ein Hinweis eine spezielle Funktion vorgesehen.

EP 0 185 912 A1

FIG. 1

## Fernbedienungsgerät·für Rundfunkempfangs-
## geräte und dergleichen

Die Erfindung betrifft ein Fernbedienungsgerät für die gemeinsame oder sukzessive Fernbedienung von Rundfunkempfangsgeräten, Plattenspielern, Bandgeräten, Fernsehgeräten und dergleichen, wobei an dem Fernbedienungsgerät das jeweil fernzusteuernde Gerät oder die jeweils fernzusteuernde Funktionsart einstellbar ist und wobei dieses Fernbedienungsgerät mehrere Bedienungstasten oder - knöpfe aufweist, mit denen an dem jeweils fernzusteuernden Gerät oder bei der fernzusteuernden Funktionsart mehrere Funktionen einstellbar sind.

In der Rundfunk- und Fernsehtechnik sind seit längerem Fensehbedienungsgeräte bekannt, mit denen es möglich ist, vorzugsweise auf drahtlosem Weg Schalthandlungen an einem Gerät vorzunehmen. Am bekanntesten unter diesen Fernsteuergeräten sind diejenigen für die Fernbedienung von Fernsehgeräten, wobei die Übertragung der Befehlssignale mittels Ultraschall oder Infrarotlicht erfolgt. Mit diesen Fernsteuerungsgeräten können die Fernsehgeräte ein- und ausgeschaltet werden. Außerdem ist es möglich, verschiedene Fernsehprogramme anzuwählen oder die Lautstärke, die Farbsättigung oder andere Größen zu verändern. Im allgemeinen sind diese bekannten Fernsteuerungsgeräte jedoch nur für die Fernbedienung eines einzigen Gerätes, z.B. eines Farbfernsehgerätes oder eines Videorekorders, geeignet. Da sich heutzutage in vielen Haushalten mehrere Geräte der Unterhaltungselektronik befinden, bringt die Zuordnung eines jeweils besonderen Fernsteuerungsgerätes zu einem einzelnen Rundfunk oder Fernsehrgerät Nachteile mit sich, da mehrere Fernbedienungsgeräte vorhanden sein und auch bedient werden müssen.

Es sind deshalb schon Fernbedienungsgeräte vorgeschlagen worden, mit denen es möglich ist, mehrere Geräte fernzusteuern. Ein besonderes Problem bei der Gestalung derartiger Fernbedienungsgeräte besteht darin, daß eine Vielzahl von Funktionen zu erfüllen sind. Ordnet man jeder dieser Funktionen eine bestimmte Taste zu, so ergibt sich ein sehr unhandliches und unübersichtliches Fernbedienungsgerät. In einem modernen Haushalt können ca. 10 fernzusteuernde Geräte vorhanden sein: Farbfernsehgerät, Plattenspieler, Tonbandmaschine, Tonkassettengerät, Videorekorder, Bild-Plattenspieler, Compact-Disc-Plattenspieler, Tuner, Verstärker und Video-Kamera. Berücksichtigt man noch, daß die modernen Farbfernsehgeräte eine Reihe von zusätzlichen Diensten realisieren, z.B. Bildschirmtext, Videotext, Stereo- oder Zweikanalton, so ergibt sich eine Fülle von Funktionen, für die ca. 100 Bedienungstasten oder mehr erforderlich wären. Ein Fernbedienungsgerät mit derart vielen Tasten wäre indessen zu unhandlich und nur schlecht zu bedienen.
Um die Übersichtlichkeit und die Handhabbarkeit eines solchen Geräts zu verbessern, ist es bekannt, die wenig benutzten Tasten mittels einer Klappe abzudecken (DE-Z: Funkschau, 1977, Heft 17, Seiten 763-768). Das Grundproblem der zu vielen Tasten wird hierdurch jedoch nicht gelöst.

Es sind auch Fernbedienungsgeräte für mehrere Einrichtungen bekannt, bei denen alle oder mehrere Tasten mit mehreren Funktionen belegbar sind. Hierbei ist in der Regel ein Umschalter vorgesehen, mit dem von einem fernzusteuernden Gerät auf ein anders fernzu-

steuerndes Gerät umgeschaltet werden kann. In der Stellung "Fern-sehgerät" kommt dann den einzelnen Tasten des Fernbedienungsgerätes eine andere Funktion zu als beispielsweise in der Stellung "Tuner". Während sich das Umschalten von "Fernsehgerät" auf "Tuner" etc. relativ einfach durch einen Schiebeschalter oder dergleichen realisieren läßt, ist es wesentlich schwieriger, dem Benutzer des Fernbedienungsgeräts anzuzeigen, welche Funktion einer Taste gerade zugeordnet ist. Man hat versucht, dieses Problem dadurch zu lösen, daß man unter die einzelnen Tasten die verschiedenen Funktionsangaben geschrieben hat. Dabei war es möglich, für jedes fernzusteuernde Gerät die jeweiligen Funktionen in einer bestimmten Farbe zu halten. In der Stellung "Farbfernsehgerät" galten z.B. die roten Begriffe unter einer Taste, während in der Stellung "Plattenspieler" die grünen Begriffe galten. Diese Lösung ist indessen ebenfalls sehr unübersichtlich, da mehrere Begriffe untereinander geschrieben werden mußten, was entweder zu einer kaum lesbaren Beschriftung oder aber zu einem großen Platzbedarf für diese Begriffe führt.

Bei einer anderen bekannten Fernsteuerung, sind zur individuellen Steuerung, Ein- und Umschaltung aller Funktionen eine oder mehrere Funktionstasten und/oder Analogwertsteller vorgesehen, die über Funktionsvorwähler an verschiedene Funktionsgeneratoren wahlweise anschaltbar sind, wobei nur die Steuerbefehle übertragen werden, die zur Steuerung der am Funktionsvorwähler eingestellten Funktionen dienen (DE-OS 27 44 057). Das Problem der für den Benutzer der Fernsteuerung sichtbaren Zuordnung einer bestimmten Taste zu einem bestimmten Gerät oder einer bestimmten Funktion wird hierdurch jedoch nicht gelöst.

Schließlich ist auch noch ein Fernbedienungsgerät bekannt, bei dem jeder Bedienungstaste ein Beschriftungsdisplay zugeordnet ist, mit dem die jeweilige Funktion oder Taste angezeigt wird (DE-OS 331 0580).

Mit diesem Fernsteuergerät kann die Zahl der Tasten wesentlich reduziert werden. Neben einem Informationsdisplay sind z.B. nur zehn oder zwölf Tasten vorgesehen, neben denen jeweils ein eigenes Display angeordnet ist. Bei einer Ausführungsform wird die Bedienungstaste mit dem Display zu einer Einheit zusammengefaßt. Hierbei sind die Tasten als druck- oder berührungssensitive transparente und dem jeweiligen Beschriftungsfeld aufgelegte Betätigungselemente aufgeführt.

Nachteilig ist bei diesem bekannten Fernsteuerungsgerät indessen, daß sowohl eine aufwendige elektronische Steuerungs-Schaltung als auch eine Vielzahl von verhältnismäßig teuren Displays vorgesehen sind.

Außerdem haben Displays den Nachteil, daß sie entweder als aktive oder passive Strahler ausgebildet sein müssen. Im ersten Fall können z.B. Leuchtdioden verwendet werden, was einen relativ hohen Energieverbrauch bedingt. Im zweiten Fall können Flüssigkristallelemente verwendet werden, die zwar weniger Energie verbrauchen, dafür aber in der Dunkelheit oder Dämmung auch nicht sichtbar sind.

Der Erfindung liegt die Aufgabe zugrunde, ein Fernsteuerungsgerät ohne eine Vielzahl von Displays zu schaffen, bei dem zu einem bestimmten Zeitpunkt stets nur ein Begriff einer Fernsteuerungstaste zugeordnet ist, obwohl diese Fernsteuerungstaste für die Fernbedienung einer Vielzahl von fernzusteuernden Geräten oder Funktionsarten dient.

Diese Aufgabe wird dadurch gelöst, daß für die Zuordnung der einzelnen Bedienungstasten oder -knöpfe zu den jeweils fernzusteuernden Geräten oder Funktionsarten eine Vorrichtung vorgesehen ist, die mehrere Fallblätter aufweist, von denen jedes Fallblatt jeweils einem fernzubedienenden Gerät oder einer fernzubedienenden Funktionsart zugeordnet ist.

Der mit der Erfindung erzielte Vorteil besteht insbesondere darin, daß sich ein sehr kompaktes Multifunktionsfernsteuerungsgerät realisieren läßt. Die Handhabung des erfindungsgemäßen Geräts ist überdies sehr einfach, was von besonderer Wichtigkeit ist, weil es überwiegend von technischen Laien benutzt wird.

Ein Ausführungsbeispiel der Erfindung ist in der Zeichnung dargestellt und wird im folgenden näher beschrieben. Es zeigen:

Fig. 1  eine perspektivische Gesamtansicht des erfindungsgemäßen Fernbedienungsgeräts;

Fig. 2  eine der Darstellung der Fig. 1 entsprechende Darstellung des erfindungsgemäßen Fernbedienungsgeräts, wobei jedoch eine Klappe heruntergeklappt ist;

Fig. 3  ein Fallblatt für die Funktion "television"

Fig. 4  ein Fallblatt für die Funktion "satellite tuner"

Fig. 5  einen Querschnitt durch das erfindungsgemäße Fernbedienungsgerät;

Fig. 6  eine Schnittdarstellung einer Schieber-Arretierung;

Fig. 7  eine andere Schnittdarstellung der in der Fig. 6 dargestellten Schieber-Arretierung.

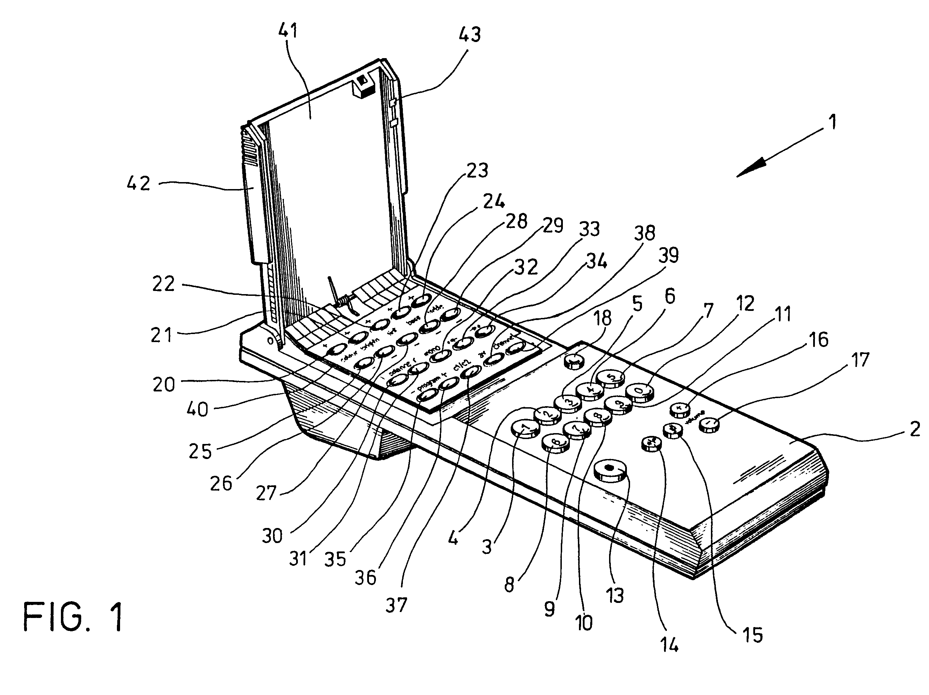

Die Fig. 1 zeigt eine perspektivische Gesamtansicht des erfindungsgemäßen Fernbedienungsgeräts 1. Auf einem unteren Teil 2 dieses Fernbedienungsgeräts 1 sind mehrere Tasten 3-18 vorgesehen, deren Funktionen noch weiter unten beschrieben werden. Auf einem oberen Teil 19, der gegenüber dem unteren Teil 2 etwas vertieft angeordnet ist, befinden sich weitere Bedienungstasten 20-39, bei denen es sich um solche handelt, denen verschiedene Funktionen zugeordnet werden können. Diese Bedienungstasten 20-39 sind von mehreren aufeinanderliegenden Blättern 40 umgeben, wobei jedes dieser Blätter 40 einem bestimmten Gerät oder einer bestimmten Funktionsart, z.B. einem Plattenspieler, zugeordnet sein kann. Am oberen Ende des Fernbedienungsgeräts 1 ist eine schwenkbare Klappe 41 vorgesehen, die auf die Bedienungstasten heruntergeklappt werden kann. Diese schwenkbare Klappe 41 ist mit einem Schieber 42 verbunden, mit dem ein Greifer 43 in Verbindung steht. Mit diesem Greifer 43 ist es möglich, eines oder mehrere der Blätter 40 zu ergreifen und mit nach oben zu nehmen. Welche Blätter nach oben mitgenommen werden, hängt von der jeweiligen Stellung des Greifers 43 ab. Somit ist es möglich, durch Verschieben des Schiebers 42 in die jeweils gewünschte Stellung, ein Blatt 40 auf der Oberseite des Teils 1 liegen zu haben, welches exakt diejenigen Beschriftungen aufweist, die dem fernzusteuernden Gerät zugeordnet sind.

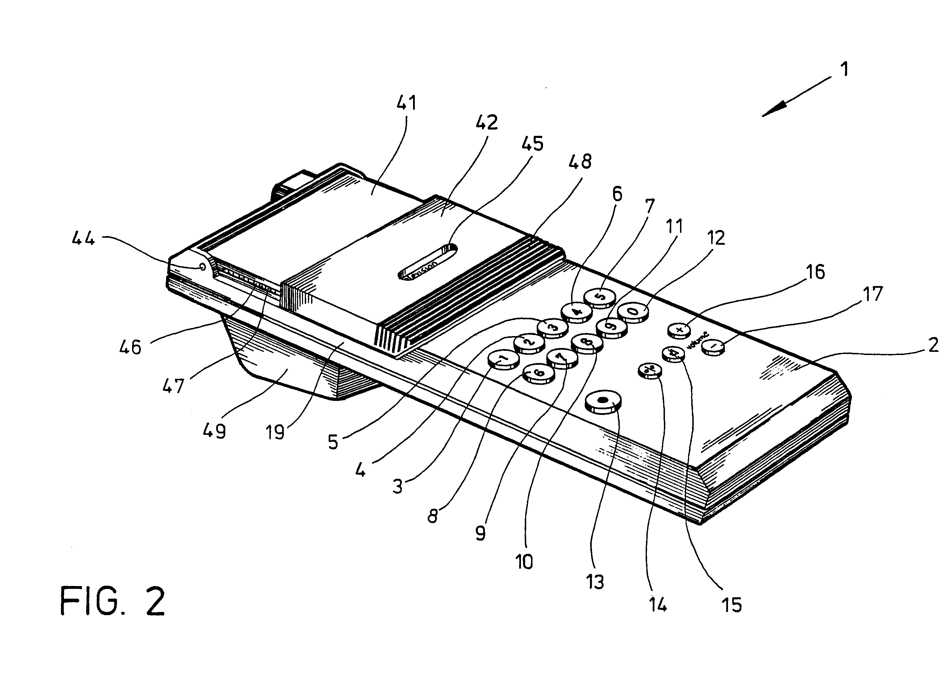

In der Fig. 2 ist das in der Fig. 1 gezeigte Fernbedienungsgerät noch einmal dargestellt, jedoch mit heruntergeklappter Klappe 41. Man erkennt hierbei wieder die Bedienungstasten 3-17 auf dem unteren Teil 2. Die Tasten des oberen Teils 1, sind jedoch nunmehr durch die Klappe 41 verdeckt. Die um die Drehachse 44 schwenkbare Klappe 41 trägt, wie bereits im Zusammenhang mit Fig. 1 beschrieben, den Schieber 42. Dieser Schieber 42 weist ungefähr in seiner Mitte ein horizontales Langloch 45 auf, durch das ein bestimmter Begriff, z.B. "Video-Rekorder" sichtbar ist. Dies bedeutet, daß in der Stellung der Fig. 2 die Bedienungsfunktionen für den Video-Rekorder aktiviert werden. Der nicht sichtbare Greifer 43 untergreift eine bestimmte Zahl von Fallblättern 40, so daß dann, wenn die Klappe 41 hochgehoben und in die Stellung gemäß Fig. 1 gebracht wird, den Tasten 20-39 jeweils ein Begriff zugeordnet ist, der die richtige Funktion bei Video-Rekorder-Betrieb anzeigt. Die entsprechende Zuordnung der jeweiligen Schaltkreise zu den bestimmten Funktionen kann durch Kontakte 46,47 bewirkt werden, die in Abhängigkeit von der Stellung des Schiebers 42 aktivierbar sind. Es wäre aber auch denkbar, daß der Greifer 43 auch diese Funktion übernimmt.

Damit der Greifer 43 die jeweils richtige Zahl von Fallblättern 40 ergreift, sind diese am Rand mit jeweils unterschiedlichen Aussparungen versehen. Während der Greifer 43 in einer unteren Position z.B. nur ein Fallblatt ergreifen kann, das keine oder nur eine geringe seitliche Aussparung aufweist, ergreift er in

einer obe n Position auch Fallblätter mit einer großen seitlichen Aussparung. Die Breite der jeweiligen Aussparung entspricht dabei mindestens der Breite des Greifers 43.

Der Schieber 42 ist mit Riffelungen 48 versehen, die seine
bessere Bedienbarkeit gestatten. Unterhalb des oberen Teils 19
ist ein Gehäuseteil 49 vorgesehen, das für die Aufnahme von
Batterien oder Akkumulatoren dient, welche für die Energieversorgung des Fernsteuergeräts 1 erforderlich sind. Die "Adressen",
welche mit dem Fernsteuergerät vorzugsweise angesteuert werden
können, sind: Fernseher, Videotext, Bildschirmtext, Videorekorder,
Satellite Tuner, Audio und Compact disc. Dies bedeutet, daß ein
Fallblatt genau genommen nicht einem bestimmten Gerät, z.B. einem
Fernsehgerät, sondern einer bestimmten Betriebsweise dieses Geräts
zugeordnet werden kann. Den Tasten 3-12 wird ebenfalls, in Abhängigkeit von der jeweiligen Stellung des Schiebers 42, eine bestimmte
Funktion zugeordnet. Im Falle der Stellung "Compact Disc" kann
mit diesen Tasten die Titelnummer ausgewählt werden, während in
der Stellung "Satellite Tuner" mit diesen Tasten die Kanäle oder
Programme angewählt werden können. In der Stellung "television"
dienen die Tasten dazu, die jeweiligen Kanäle oder Programme anzuwählen, und in der Stellung "btx" dienen diese Tasten zur Code-
Eingabe etc., während sie in der Stellung "vtx" (=Videotext) die
Seitennummern angeben können.

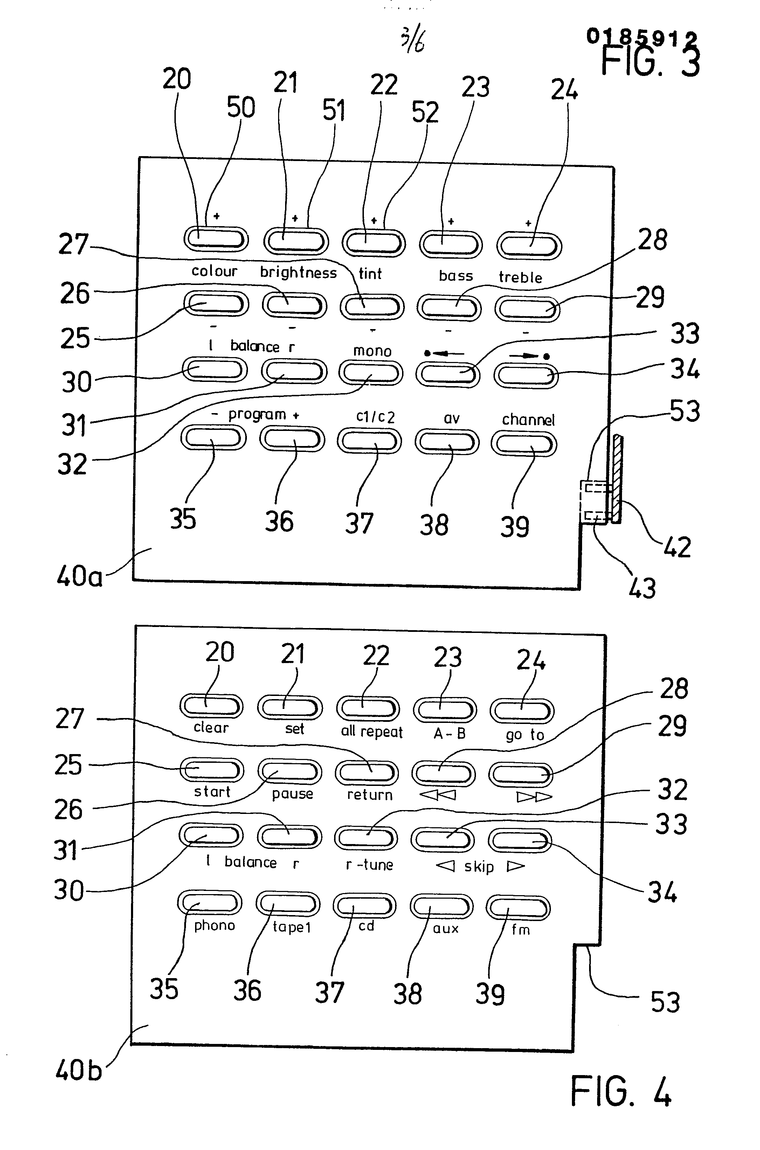

In der Fig. 3 ist ein Fallblatt 40a dargestellt, das der Funktion
"television" zugeordnet ist. Dieses Fallblatt 40a liegt dann auf
der Oberseite des oberen Teils, wenn in dem ovalen Schlitz 45
das Wort "television" erscheint. Die einzelnen Tasten 20-39 ragen
durch jeweils eine entsprechende Durchbrechung in diesem Fallblatt 40a. Von diesen Durchbrechungen sind nur die drei ersten
mit Bezugszahlen 50,51,52 versehen. Der Schieber 42 mit dem Greifer
43 ist teilweise am Rand des Fallblatts 40a dargestellt. Man erkennt hierbei, daß dieses Fallblatt 40a durch den Greifer 43 festgehalten wird. Das darunter liegende Fallblatt 40b jedoch, dessen Aussparung am rechten unteren Rand größer ist und an der gestrichelten Linie 53 endet, wird durch den Greifer 43 nicht erfaßt. In der Fig. 4 ist dieses Fallblatt 40b noch einmal im e´ ´elnen dargestellt. Man erkennt hierbei, daß es die Beschriftung für einen satellite tuner aufweist.

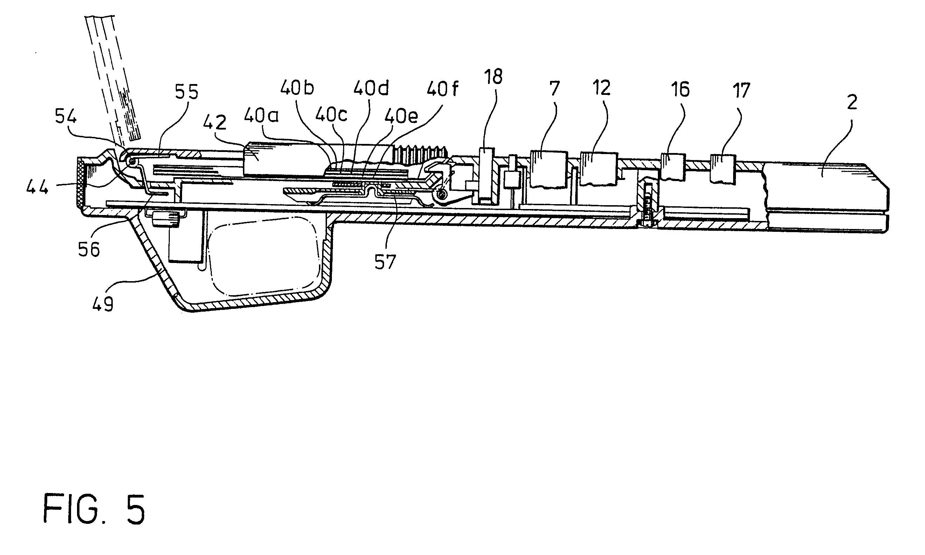

In der Fig. 5 ist ein Querschnitt durch das erfindungsgemäße Fernbedienungsgerät dargestellt. Man erkennt hierbei die einzelnen Fallblätter 40a-40f sowie die Drehachse 44, um die eine Feder 54 mit den Armen 55,56 geschlungen ist. Desgleichen ist eine z.B. mit dem Greifer 43 verschiebbare Einrichtung 57 zu erkennen, die je nach ihrer räumlichen Stellung bestimmte elektrische Schaltungen betätigt.

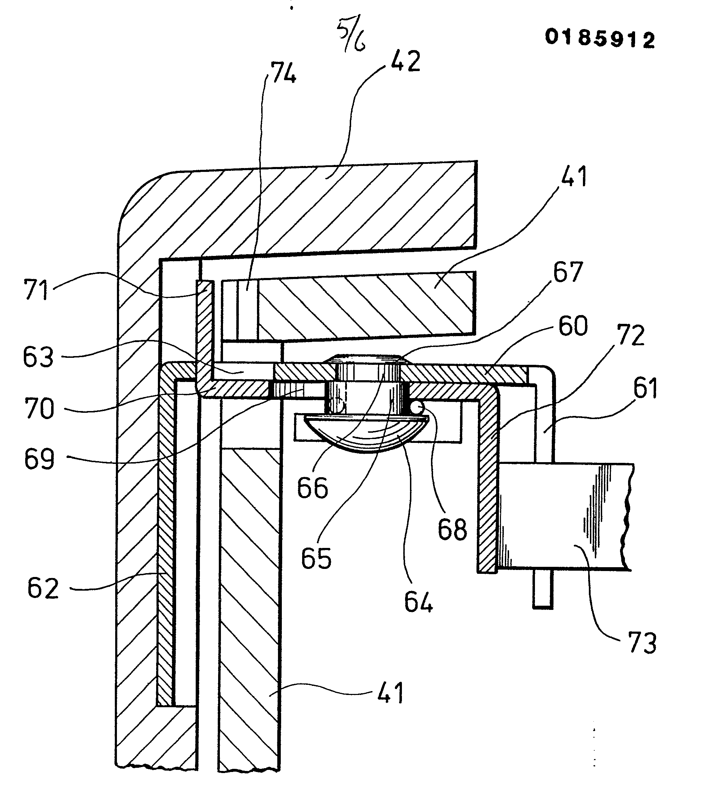

In der Fig. 6 ist eine Vorrichtung dargestellt, mit der es möglich ist, den Schieber 42 dann, wenn die Klappe 41 hochgehoben ist, zu sperren. Dieser Schieber 42 kann somit nur in der zugeklappten Position der Klappe 41 (vergl. Fig. 2), nicht aber in der hochgeklappten Position dieser Klappe 41 (vergl. Fig. 1) verschoben werden. Hierdurch wird erreicht, daß zwischen der jeweiligen Stellung des Schiebers 42 und der eingeschalteten elektronischen Schaltung stets eine feste Zuordnung besteht. Wäre es möglich, den Schieber 42 auch in die Position zu verschieben, die in der Fig. 1 gezeigt ist, so würde der jeweilige Schieberstellung nicht mehr mit der tatsächlich eingeschalteten Schaltung, die einer bestimmten Funktion oder einem bestimmten Gerät (z.B. "television") zugeordnet ist, übereinstimmen. In dem Öffnungsschlitz 45 könnte somit das Wort "satellite tuner" stehen, während die elektrische Schaltung auf "television" eingestellt ist.

Bei der in der Fig. 6 dargestellten Vorrichtung erkennt man einen Teil des Schiebers 42 sowie einen Teil der Klappe 41 im Schnitt. Die Klappe bzw. der innere Klappenrand 41, weist zwei aufeinander senkrecht stehende Teile auf, wobei der vertikale Teil mit einer Durchbrechung versehen ist. An der Innenwand des Schiebers 42 ist

ein u-förmiges Teil angeflanscht, das zwei vertikale Stege 61,62 und einen horizontalen Steg 60 aufweist. Dieser horizontale Steg 60 trägt ein Nietelement, das einen Kopf 64, einen zylindrischen Mittelteil 65, ein zylindrisches Unterteil 66 und einen kegelstumpfartigen Abschluß 67 aufweist. Unterhalb des horizontalen Stegs 60 des u-förmigen Teils ist der horizontale Steg 70 eines z-förmigen Teils mit den vertikalen Stegen 71,72 vorgesehen. In dem horizonalen Steg 70 ist ein Langloch 69 vorgesehen, welches eine horizontale Bewegung des z-förmigen Teils relativ zu dem u-förmigen Teil gestattet. Die feste Kopplung des Schiebers 42 an die Klappe 41 erfolgt im hochgeklappten Zustand auf die Weise, daß das z-förmige Teil durch die Kraft einer Feder 68 nach rechts verschoben wird, so daß der vertikale Teil 71 in eine Aussparung 74 der Klappe 41 eingreift. Wird die Klappe 41 mit dem Schieber 42 nach unten gedrückt, so daß beide die in der Fig. 2 gezeigte Position einnehmen, dann drückt ein.mit dem Oberteil 19 gekoppeltes Element 73 auf den Steg 72, so daß das z-förmige Teil nach links verschoben wird und der vertikale Steg 71 aus der Aussparung 74 wieder ausklinkt.

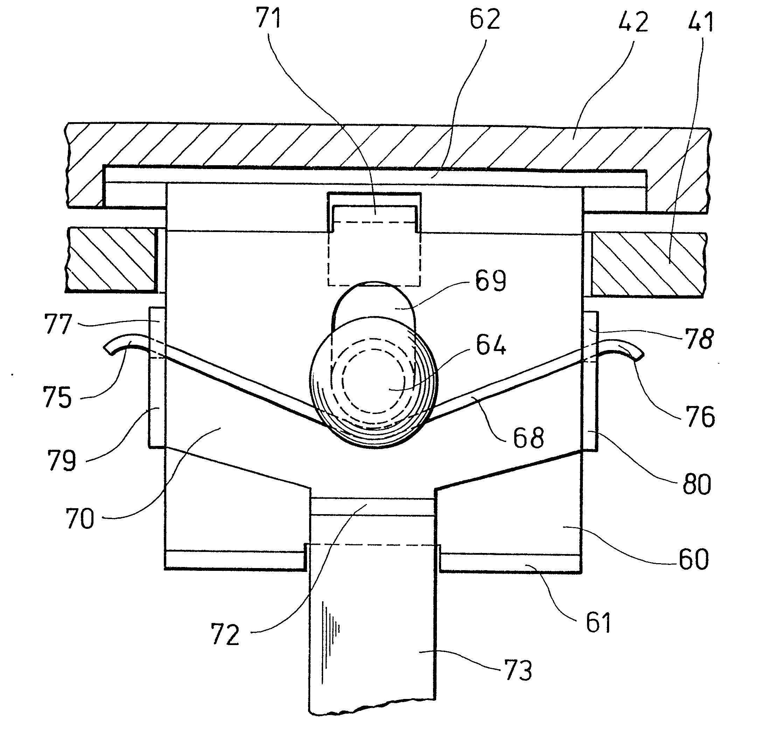

In der Fig. 7 ist die Vorrichtung der Fig. 6 noch einmal in einer anderen Ansicht gezeigt. Man erkennt hierbei wieder den Schieber 42 sowie die Klappe 41, und zwar in einer Draufsicht auf den Kopf 64 des Nietelements. Die Fig. 7 zeigt somit die in der Fig. 6 dargestellte Vorrichtung, wenn man in der Fig. 6 von unten nach oben schaut. Das in der Fig. 6 dargestellte u-förmige Teil ist in der Fig. 7 als flächiges Teil mit den Randstegen 61,62 zu erkennen. Auch das z-förmige Teil ist flächig ausgebildet, wobei die vertikalen Schenkel 71,72 verhältnismäßig schmal sind. Die Feder 68 greift mit ihren äußeren Enden 75,76 in Aussparungen 77,78 von Seitenflächen 79,80 ein, so daß das Teil 70 bei nicht vorhandener Gegenkraft nach unten verschoben wird. Erst wenn z.B. mittels des Elements 73 gegen den Steg 72 gedrückt wird, bewegt sich das z-förmige Teil 70 nach oben, wodurch der Schenkel 71 ausklinkt.

Das vorbeschriebene Fernbedienungsgerät weist eine nicht
näher beschriebene elektronische Schaltung auf. Diese elektronische Schaltung zählt indessen zum Stand der Technik
und enthält im wesentlichen eine integrierte Schaltung,
z.B. den integrierten Schaltkreis SAA 3004 der Fa. Valvo.

**0185912**

## Patentansprüche

1. Fernbedienungsgerät für die gemeihsame oder sukzessive Fernbedienung von Rundfunkempfangsgeräten, Plattenspielern, Bandgeräten, Fernsehgeräten und dergleichen, wobei an dem Fernbedienungsgerät das jeweils fernzusteuernde Gerät oder die jeweils fernzusteuernde Funktionsart einstellbar ist und wobei dieses Fernbedienungsgerät mehrere Bedienungstasten oder -knöpfe aufweist, mit denen an dem jeweils fernzusteuernden Gerät oder bei der fernzusteuernden Funktionsart mehrere Funktionen einstellbar sind, dadurch gekennzeichent, daß für die Zuordnung der einzelnen Bedienungstasten oder -knöpfe (3-17, 20-39) zu den jeweils fernzusteuernden Geräten oder Funktionsarten eine Vorrichtung vorgesehen ist, die mehrere Fallblätter (40a-40f) aufweist, von denen jedes Fallblatt (40a-40f) jeweils einem fernzubedienenden Gerät oder einer fernzubedienenden Funktionsart zugeordnet ist.

2. Fernbedienungsgerät nach Anspruch 1, dadurch gekennzeichnet, daß die Fallblätter (40a-40f) Aussparungen aufweisen (z.B. 50-52), durch welche die Bedienungstasten oder -knöpfe (20-39) führbar sind.

3. Fernbedienungsgerät nach Anspruch 1, dadurch gekennzeichnet, daß an einem Schieber (42) ein Greifer (43) vorgesehen ist, mit dem Fallblätter (40a-40f) ergriffen werden können.

4. Fernbedienungsgerät nach Anspruch 1, dadurch gekennzeichnet, daß an dem Fernbedienungsgerät (1) eine Klappe (41) mit einem Schieber (42) vorgesehen ist, wobei dieser Schieber (42) in verschiedenen Stellungen verschiedene elektrische Kontakte auslöst und wobei mit Hilfe des Schiebens eine vorbestimmte Anzahl von Fallblättern (40a-40f) aufgenommen und zusammen mit der Klappe (41) um einen bestimmten Winkel geschwenkt werden kann.

5. Fernbedienungsgerät nach Anspruch 1, dadurch gekennzeichnet, daß die Fallblätter (40a-40f) an einem ihrer Ränder jeweils eine Aussparung (53) aufweisen, wobei die Aussparungen (53) bei jedem Fallblatt (40a-40f) verschieden sind.

6. Fernbedienungsgerät nach Anspruch 3, dadurch gekennzeichnet, daß der Schieber (42) nur im nach unten geklappten Zustand verschiebbar ist.

7. Fernbedienungsgerät nach Anspruch 1, dadurch gekennzeichnet, daß es in einen oberen Teil (19) und in einen unteren Teil (2) untergliedert ist, wobei nur der obere Teil (19) durch eine Klappe (41) abdeckbar ist.

8. Fernbedienungsgerät nach Anspruch 7, dadurch gekennzeichnet, daß der obere Teil (19) eine erste Anzahl von Bedienungstasten (20-39) und der untere Teil (2) eine zweite Anzahl von Bedienungstasten (3-17) trägt.

9. Fernbedienungsgerät nach Anspruch 1, dadurch gekennzeichnet, daß es unterhalb eines oberen Teils (19) ein Batteriefach (49) aufweist.

10. Fernbedienungsgerät nach Anspruch 6, dadurch gekennzeichnet, daß ein verschiebbares Teil (70,71,72) vorgesehen ist, mit dem eine feste Kopplung zwischen dem Schieber (42) und der Klappe (41) herstellbar ist.

11. Fernbedienungsgerät nach Anspruch 10, dadurch gekennzeichnet, daß das verschiebbare Teil (70,71,72) an einem mit dem Schieber (42) fest verbundenen Teil (60,61,62) verschiebbar angeordnet ist und daß eine Lasche (71) dieses Teils (70,71,72) in einer ersten Stellung in eine Aussparung (74) der Klappe (41) eingreift.

12. Fernbedienungsgerät nach Anspruch 11, dadurch gekennzeichnet, daß das verschiebbare Teil (70,71,72) z-förmig ausgebildet ist.

13. Fernbedienungsgerät nach Anspruch 12, dadurch gekennzeichnet, daß im mittleren Bereich (70) des z-förmigen Teils (70,71,72) ein Langloch (69) vorgesehen ist, in dem sich ein Verbindungselement (64,65,66) bewegen kann, das an ein mit dem Schieber (42) verbundenes Teil (60,61,62) gekoppelt ist.

14. Fernbedienungsgerät nach Anspruch 10, dadurch gekennzeichnet, daß das verschiebbare Teil (70,71,72) durch die Kraft einer Feder (68) im hochgeklappten Zustand der Klappe (41) in eine Aussparung (74) dieser Klappe (41) eingreift.

15. Fernbedienungsgerät nach Anspruch 10, dadurch gekennzeichnet, daß ein Betätigungselement (73) vorgesehen ist, das im heruntergeklappten Zustand der Klappe (41) gegen das verschiebbare Teil (70,71,72) drückt und hierdurch dieses von der Klappe (41) freigibt.

16. Fernbedienungsgerät nach Anspruch 14, dadurch gekennzeichnet, daß die Feder (68) an einem Schaft (65) der Nietverbindung (64,65, 66) angelegt ist und mit ihren Enden in Aussparungen (77,78) des verschiebbaren Teils (70,71,72) eingreift.

FIG. 1

FIG. 2

3/6

0185912

FIG. 3

FIG. 4

FIG. 5

0185912

FIG. 6

FIG. 7

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | EP-A-0 002 434  (LOEWE OPTA)<br>* Seite 8, Zeile 3 - Seite 9, Zeile 16; Figur 1 * | 1-5 | H 04 B    1/20 |
| Y | PATENTS ABSTRACTS OF JAPAN, Band 8, Nr. 223 (P-307) [1660], 12. Oktober 1984; & JP - A - 59 105 164 (CANON K.K.) 18.06.1984<br>* Zusammenfassung * | 1-5 | |
| D,A | FUNKSCHAU, Heft 17, 1977, Seiten 763-768, München, DE; W. BAUM: "Farbfernsehgerät mit Mikroprozessor-Steuerung"<br>* Seite 763; Figur 1 * | 7,8 | |
| A | PATENTS ABSTRACTS OF JAPAN, Band 7, Nr. 228 (P-228) [1373], 8. Oktober 1983; & JP - A - 58 117 023 (FUJITSU K.K.) 12.07.1983<br>* Zusammenfassung * | 1,2,4 | RECHERCHIERTE SACHGEBIETE (Int Cl 4)<br><br>H 04 B<br>G 06 F |
| A | US-A-3 600 592  (R.E. MAHAN et al.)<br>* Zusammenfassung; Figuren 1-3 * | 1,2 | |

Der vorliegende Recherchenbericht wurde für alle Patentansprüche erstellt

| Recherchenort<br>DEN HAAG | Abschlußdatum der Recherche<br>21-03-1986 | Prüfer<br>VAN WEEL E.J.G. |
|---|---|---|